Europäisches Patentamt

European Patent Office

Office européen des brevets

(19)

(11) **EP 0 925 484 B1**

(12) **EUROPÄISCHE PATENTSCHRIFT**

(45) Veröffentlichungstag und Bekanntmachung des Hinweises auf die Patenterteilung:
**06.08.2003 Patentblatt 2003/32**

(51) Int Cl.$^7$: **G01D 3/08**, G01D 18/00, G01P 21/02, B60T 8/00

(21) Anmeldenummer: **98933486.7**

(22) Anmeldetag: **09.05.1998**

(86) Internationale Anmeldenummer:
**PCT/DE98/01292**

(87) Internationale Veröffentlichungsnummer:
**WO 99/001718 (14.01.1999 Gazette 1999/02)**

(54) **VERFAHREN UND VORRICHTUNG ZUR ÜBERWACHUNG VON SENSOREN IN EINEM FAHRZEUG**

METHOD AND DEVICE FOR MONITORING SENSORS IN A VEHICLE

PROCEDE ET DISPOSITIF POUR LE CONTROLE DE DETECTEURS DANS UN VEHICULE

(84) Benannte Vertragsstaaten:
**DE FR GB IT**

(30) Priorität: **02.07.1997 DE 19728094**
**04.11.1997 DE 19748596**

(43) Veröffentlichungstag der Anmeldung:
**30.06.1999 Patentblatt 1999/26**

(73) Patentinhaber: **ROBERT BOSCH GMBH**
**70442 Stuttgart (DE)**

(72) Erfinder:
• **MERGENTHALER, Rolf-Hermann**
**D-71229 Leonberg (DE)**
• **URBAN, Werner**
**D-71665 Vaihingen (DE)**

(56) Entgegenhaltungen:
**EP-A- 0 387 384          WO-A-98/10297**
**DE-A- 19 510 525        DE-A- 19 525 217**
**US-A- 5 140 524**

• **"NORMALIZED MEASUREMENT COMPARISON (NMC) MEANS FOR AUTOMOTIVE POWERTRAIN (PT)/-CHASSIS (CH) SYSTEMS' ANGULAR SPEED SENSOR AND/OR PT MECHANICAL SLIP DIAGNOSTICS" RESEARCH DISCLOSURE, Nr. 352, 1. August 1993, Seite 504 XP000395236**
• **ZANTEN VAN A ET AL: "FDR - DIE FAHRDYNAMIK-REGELUNG VON BOSCH" ATZ AUTOMOBILTECHNISCHE ZEITSCHRIFT, Bd. 96, Nr. 11, 1. November 1994, Seiten 674-678, 683 - 689, XP000478694 in der Anmeldung erwähnt**

**Beschreibung**

Die Erfindung betrifft eine Vorrichtung und ein Verfahren zur Überwachung von in einem Fahrzeug eingesetzten Sensoren. Insbesondere dient die Vorrichtung bzw. das Verfahren der Überwachung der Sensoren, die in einem System zur Regelung der Fahrdynamik eines Fahrzeuges eingesetzt werden.

Vorrichtungen und Verfahren zur Überwachung von in einem Fahrzeug eingesetzten Sensoren sind aus dem Stand der Technik in vielerlei Modifikationen bekannt.

Die unter dem Aktenzeichen P 196 36 443 beim Deutschen Patentamt eingereichte Patentanmeldung beschreibt ein Verfahren und eine Vorrichtung zur Überwachung von Sensoren in einem Fahrzeug. Bei diesem Verfahren bzw. bei dieser Vorrichtung werden Sensoren überwacht, die jeweils unterschiedliche physikalische Größen repräsentieren. Die Vorrichtung enthält Mittel, mit denen für wenigstens zwei Sensoren, ausgehend von wenigstens den von ihnen erzeugten Signalen, für die Sensoren gleich definierte Vergleichsgrößen ermittelt werden. Ferner enthält die Vorrichtung weitere Mittel, mit denen in Abhängigkeit von wenigstens den ermittelten Vergleichsgrößen eine Referenzgröße ermittelt wird. Ausgehend von dieser Referenzgröße wird für die einzelnen Sensoren jeweils eine Sensorreferenzgröße ermittelt. Dieser Patentanmeldung ist u.a. für den Gierratensensor eine Überwachung zu entnehmen. Die Überwachung des Gierratensensors setzt sich aus mehreren Plausibilitätsabfragen zusammen. U.a. wird für den Gierratensensor eine Abfrage durchgeführt, in die der Wert des mit Hilfe des Gierratensensors erzeugten Signals und der erzeugte Sensorreferenzwert eingehen. Hierzu wird aus dem Wert des mit Hilfe des Gierratensensors erzeugten Signals und dem zugehörigen Sensorreferenzwert eine Differenz gebildet und diese mit einem zugehörigen Schwellenwert verglichen. In die Bildung dieses Schwellenwertes gehen folgende Größen ein:

Der Wert, des mit Hilfe des Gierratensensors erzeugten Signals, die für den Lenkwinkelsensor gleich definierte Vergleichsgröße, der Wert, des mit Hilfe des Lenkwinkelsensors erzeugten Signals, eine die Fahrzeuglängsgeschwindigkeit beschreibende Größe, sowie eine Größe für die Giergeschwindigkeit, bei der die Einflüsse von quergeneigten Fahrbahnen berücksichtigt sind.

Systeme zur Regelung der Fahrdynamik eines Fahrzeuges sind beispielsweise aus der in der Automobiltechnischen Zeitschrift (ATZ) 16, 1994, Heft 11, auf den Seiten 674 bis 689 erschienen Veröffentlichung "FDR - die Fahrdynamikregelung von Bosch" bekannt.

Die Aufgabe der vorliegenden Erfindung besteht darin, die Überwachung von in einem Fahrzeug eingesetzten Sensoren zu verbessern.

Diese Aufgabe wird durch die Merkmale des Anspruchs 1 bzw. durch die des Anspruchs 10 gelöst.


Vorteile der Erfindung

Mit der Vorrichtung werden Sensoren überwacht, die signale erzeugen, welche unterschiedliche physikalische Größen repräsentieren. Dabei werden vorteilhafterweise für wenigstens zwei Sensoren, ausgehend von wenigstens den von ihnen erzeugten Signalen, für die Sensoren gleich definierte Vergleichsgrößen ermittelt. Für wenigstens einen Sensor wird eine Überwachung durchgeführt, wobei die Überwachung vorteilhafterweise wenigstens in Abhängigkeit einer für den Sensor ermittelten Sensorreferenzgröße, dem mit dem Sensor erzeugten Signal und einem zugehörigen Schwellenwert durchgeführt wird.

Der Vorteil der Erfindung gegenüber dem eingangs genannten Stand der Technik ist der, daß bei der erfindungsgemäßen Vorrichtung, bzw. dem erfindungsgemäßen Verfahren zur Überwachung der in einem Fahrzeug eingesetzten Sensoren bei der Bildung des Schwellenwertes, der für die Durchführung der Überwachung des wenigstens einen Sensors benötigt wird, eine Größe berücksichtigt wird, die wenigstens ausgehend von wenigstens zwei der gleich definierten Vergleichsgrößen ermittelt wird.

Ferner ist es vorteilhaft, daß in die Bildung des Schwellenwertes eine vorgegebene, von den gleich definierten Vergleichsgrößen unabhängige Größe eingeht. Hierbei ergibt sich der Schwellenwert vorteilhafterweise als Summe der Größe, die wenigstens ausgehend von wenigstens zwei der gleich definierten Vergleichsgrößen gebildet wird und der vorgegebenen, von den gleich definierten Vergleichsgrößen unabhängigen Größe.

Die bei der Bildung des Schwellenwertes berücksichtigte Größe beschreibt vorteilhafterweise die Abweichung der wenigstens zwei gleich definierten Vergleichsgrößen untereinander. Vorteilhafterweise bleibt bei der Bildung dieser Größe dis gleich definierte Vergleichsgröße des Sensors unberücksichtigt, der mit Hilfe der Vorrichtung überwacht wird. Zur Bildung der Größe, die die Abweichung der wenigstens zwei gleich definierten Vergleichsgrößen untereinander beschreibt, wird vorteilhafterweise ausgehend von jeder der wenigstens zwei gleich definierten Vergleichsgrößen jeweils eine Größe ermittelt, die die Abweichung dieser gleich definierten Vergleichsgröße zu den anderen der wenigstens zwei gleich definierten Vergleichsgrößen beschreibt.

Durch die vorbeschriebene Bildung des Schwellenwertes ergibt sich folgender Vorteil:

Dadurch, daß bei der Bildung des Schwellenwertes eine Größe berücksichtigt wird, die wenigstens ausgehend von wenigstens zwei der gleich definierten Vergleichsgrößen ermittelt wird, geht in die Bildung des Schwellenwertes die Streuung der gleich definierten Vergleichsgrößen ein. Liefern die gleich definierten Vergleichsgrößen eine gute Übereinstimmung, so kann der wenigstens eine Sensor auf einen kleinen Schwellenwert, das heißt, auf sehr enge Toleranzen hin überwacht werden. Diese Überwachung ist dabei unabhängig von der Fahrsituation. Weisen dagegen die gleich definierten Vergleichsgrößen untereinander größere Schwankungen auf, die auf fahrsituationsabhängige Modellungenauigkeiten oder auf toleranzbehaftete Sensorsignale zurückzuführen sind, so erfordert dies eine entsprechende Vergrößerung des Schwellenwertes, bzw. eine entsprechende Aufweitung der Überwachungstoleranzen.

Ein weiterer Vorteil ergibt sich dadurch, daß mit Hilfe eines Filters die bei der Bildung des Schwellenwertes berücksichtige Größe gefiltert wird.

Die für die Durchführung der Überwachung des wenigstens einen Sensors benötigte Sensorreferenzgröße wird vorteilhafterweise wenigstens ausgehend von den gleich definierten Vergleichsgrößen gebildet. Ferner ist es von Vorteil, daß zur Überwachung des wenigstens einen Sensors das mit dem Sensor erzeugte Signal offsetkorrigiert wird. Der Betrag der Differenz aus dem offsetkorrigierten Signal und der Sensorreferenzgröße wird mit dem zugehörigen Schwellenwert verglichen.

Als vorteilhaft hat es sich erwiesen, daß zur Überwachung des wenigstens einen Sensors eine Größe gebildet wird, die insbesondere als Zähler realisiert ist. Die Größe wird erhöht, wenn der Betrag der Differenz, die aus dem offsetkorrigierten Signal und der Sensorreferenzgröße gebildet wird, größer als der Schwellenwert ist. Die Größe wird erniedrigt, wenn besagter Betrag der Differenz kleiner als der Schwellenwert ist. Der wenigstens eine Sensor ist dann fehlerhaft, wenn die Größe größer als ein zweiter Schwellenwert ist.

Vorteilhafterweise repräsentieren die gleich definierten Vergleichsgrößen eine physikalische Größe, die vorzugsweise einer, mit einem der im Fahrzeug enthaltenen Sensoren erfaßten Größe, insbesondere einer Giergeschwindigkeit, entspricht.

Weitere vorteilhafte Ausgestaltungen der Erfindung können den Unteransprüchen und der Zeichnung entnommen werden.

Zeichnung

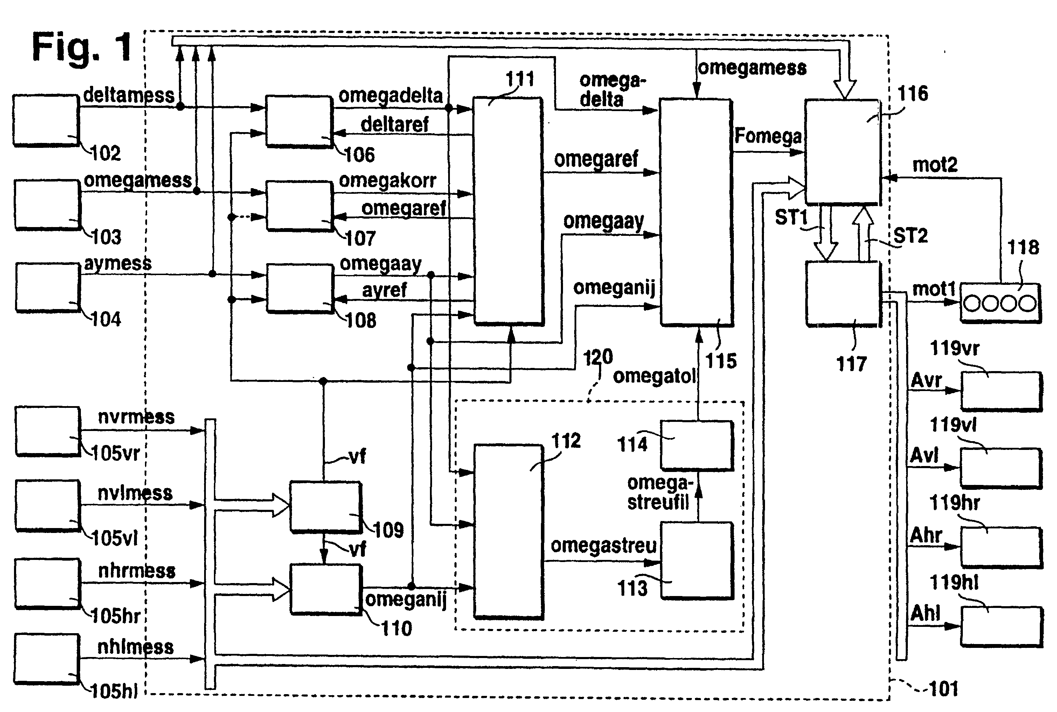

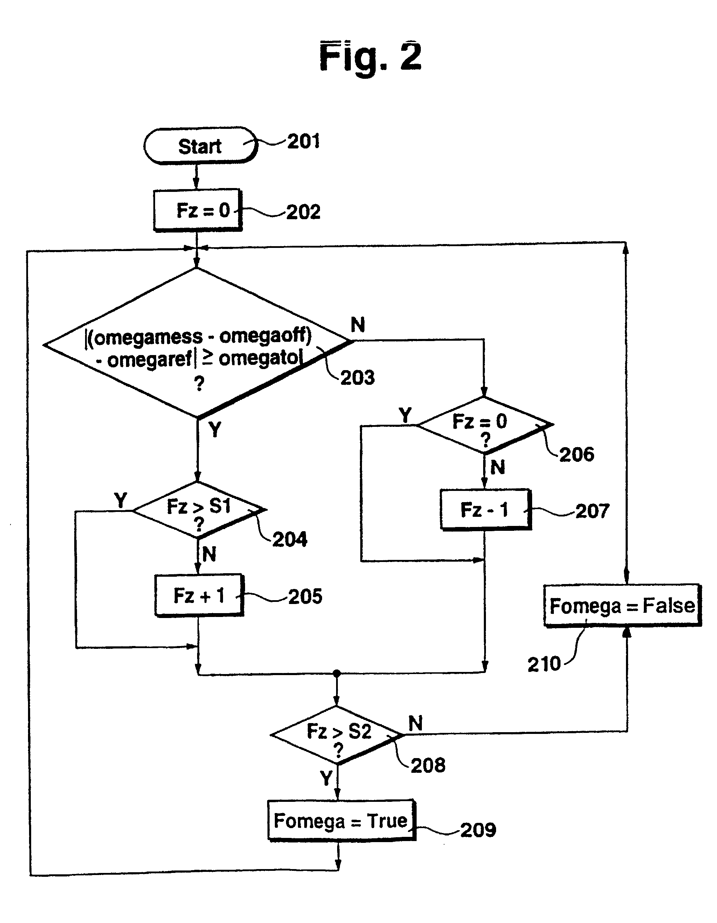

Die Zeichnung besteht aus den Figuren 1 und 2. Figur 1 zeigt den Aufbau der erfindungsgemäßen Vorrichtung zur Durchführung des erfindungsgemäßen Verfahrens. Das Flußdiagramm in Figur 2 zeigt einen Teil der zur Überwachung eines Gierratensensors ablaufenden Überwachung.

In den Figuren sind identische Komponenten mit der selben Ziffer gekennzeichnet.

Ausführungsbeispiel

Die Erfindung soll nun anhand der Figuren 1 und 2 beschrieben werden.

Die spezielle Form des gewählten Ausführungsbeispiels - der Einsatz der erfindungsgemäßen Vorrichtung bzw. des erfindungsgemäßen Verfahrens in einem System zur Regelung der Fahrdynamik eines Fahrzeuges - soll keine Einschränkung der erfindungsgemäßen Idee darstellen.

In Figur 1 stellt der Block 101 ein Steuergerät dar, welches in der erfindungsgemäßen Vorrichtung zur Durchführung des erfindungsgemäßen Verfahrens zum Einsatz kommt.

Mit 102 ist ein Lenkwinkelsensor bezeichnet, mit dem eine den am Fahrzeug eingestellten Lenkwinkel beschreibende Größe deltamess erfaßt werden kann. Das mit Hilfe des Lenkwinkelsensor 102 erzeugte Signal deltamess wird sowohl einem Block 106 als auch einem Block 116 zugeführt. Mit Hilfe eines Drehraten- bzw. Gierratensensors 103 wird eine die Gierbewegung des Fahrzeuges um seine Hochachse beschreibende Größe erfaßt. Das mit Hilfe des Drehraten- bzw. Gierratensensors 103 erfaßte Signal omegamess wird sowohl einem Block 107 als auch einem Block 115 und einem Block 116 zugeführt. Mit einem Querbeschleunigungssensor 104 wird eine die am Fahrzeug angreifende Querbeschleunigung beschreibende Größe erfaßt. Das mit Hilfe des Querbeschleunigungssensors 104 erzeugte Signal aymess wird den Blöcken 108 sowie 116 zugeführt. Die Blöcke 105vr, 105vl, 105hr bzw. 105hl stellen den Rädern des Fahrzeuges zugeordnete Raddrehzahlsensoren dar. Nachfolgend wird für die Raddrehzahlsensoren die vereinfachende Schreibweise 105ij eingeführt. Dabei gibt der Index i an, ob sich das Rad an der Hinterachse (h) oder an der Vorderachse (v) befindet. Der Index j zeigt die Zuordnung zur rechten (r) bzw. zur linken (1) Fahrzeugseite an. Diese Kennzeichnung durch die beiden Indizes i bzw. j ist für sämtliche Größen bzw. Komponenten, bei denen sie Verwendung findet, entsprechend. Die mit Hilfe der Raddrehzahlsensoren 105ij erzeugten Signale nijmess werden den Blöcken 109, 110 bzw. 116 zugeführt.

Ausgehend von den mit den Raddrehzahlsensoren 105ij erzeugten Signalen nijmess wird in einem Block 109 eine die Fahrzeuggeschwindigkeit beschreibende Größe vf erzeugt. Diese die Fahrzeuggeschwindigkeit beschreibende Größe vf wird ausgehend vom Block 109 den Blöcken 106, 108, 110 sowie einem Block 111 zugeführt. Optional kann die Größe vf auch dem Block 107 zugeführt werden.

In den Blöcken 106, 107, 108 sowie 110 werden für die Sensoren 102, 103, 104 sowie 105ij gleich definierte Vergleichsgrößen ermittelt. Im vorliegenden Ausführungsbeispiel sei angenommen, daß die für die Sensoren gleich definierten Vergleichsgrößen als physikalische Größe eine Giergeschwindigkeit repräsentieren.

In einem Block 106 wird ausgehend von dem ihm zugeführten Signal deltamess, sowie der die Fahrzeuggeschwindigkeit beschreibenden Größe vf, sowie der ihm zugeführten Größe deltaref eine gleich definierte Vergleichsgröße omegadelta ermittelt. Die gleich definierte Vergleichsgröße omegadelta wird ausgehend vom Block 106 den Blöcken 111, 112 bzw. 115 zugeführt. Die Ermittlung der gleich definierten Vergleichsgröße omegadelta läuft im Block 106 beispielsweise folgendermaßen ab:

Zunächst wird ausgehend von dem Signal deltamess, von der die Fahrzeuggeschwindigkeit beschreibenden Größe vf sowie einem Signal deltaref, welches einen Referenzwert für den mit Hilfe des Lenkwinkelsensors 102 erfaßten Lenkwinkel beschreibt, ein Offsetwert für das Signal deltamess ermittelt. Ausgehend von dem ermittelten Offsetwert wird das Signal deltamess korrigiert. Aus dem korrigierten Signal wird mit Hilfe eines mathematischen Modells unter Berücksichtigung der die Fahrzeuggeschwindigkeit beschreibenden Größe vf die gleich definierte Vergleichsgröße omegadelta ermittelt.

Im Block 108 läuft die Ermittlung der gleich definierten Vergleichsgröße omegaay ausgehend von den ihm zugeführten Signalen aymess, vf sowie ayref entsprechend der Ermittlung der gleich definierten Vergleichsgröße omegadelta im Block 106 ab. Die gleich definierte Vergleichsgröße omegaay wird sowohl einem Block 111 als auch den Blöcken 112 bzw. 115 zugeführt.

Da wie bereits erwähnt, die für die Sensoren gleich definierten Vergleichsgrößen als physikalische Größe eine Giergeschwindigkeit repräsentieren, entspricht die im Block 107 ermittelte gleich definierte Vergleichsgröße omegakorr dem offsetkorrigierten Signal omegamess, da in diesem Fall eine Umrechnung des offsetkorrigierten Sensorsignals mit Hilfe eines mathematischen Modells in eine Giergeschwindigkeit nicht erforderlich ist. Wie bereits im Zusammenhang mit den Blöcken 106 bzw. 108 beschrieben, wird im Block 107, ausgehend von dem Signal omegamess sowie der Größe omegaref ein Offsetwert für das Signal omegamess ermittelt. Mit Hilfe dieses Offsetwertes wird die gleich definierte Vergleichsgröße omegakorr aus dem Signal omegamess berechnet. Die Größe omegakorr wird einem Block 111 zugeführt.

Für den Fall, daß die für die Sensoren gleich definierten Vergleichsgrößen als physikalische Größe eine andere Größe als die Giergeschwindigkeit repräsentieren, ist auch im Block 107 eine Umrechnung des offsetkorrigierten Signals mit Hilfe eines mathematischen Modells erforderlich. Aus diesem Grund ist die Zuführung der die Fahrzeuggeschwindigkeit beschreibenden Größe vf an dem Block 107 angedeutet.

In einem Block 110 wird ausgehend von den mit Hilfe der Raddrehzahlsensoren 105ij erzeugte Signale nijmess sowie der die Fahrzeuggeschwindigkeit repräsentierenden Größe vf für die Raddrehzahlsensoren 105ij eine gleich definierte Vergleichsgröße omeganij ermittelt. Die gleich definierte Vergleichsgröße omeganij wird ausgehend vom Block 110 den Blökken 111, 112 bzw. 115 zugeführt.

Im Block 111 finden zwei Abläufe statt. Zum einen wird im Block 111 ausgehend von den ihm zugeführten gleich definierten Vergleichsgrößen omegadelta, omegakorr, omegaay bzw. omeganij, eine Referenzgröße omegaref ermittelt. Zur Ermittlung der Referenzgröße omegaref bietet sich beispielsweise an, zunächst diejenige gleich definierte Vergleichsgröße zu ermitteln, die den größten Abstand zu der zuletzt ermittelten Referenzgröße aufweist. Da diese Vergleichsgröße den größten Abstand zu der zuletzt ermittelten Referenzgröße aufweist, kann daraus geschlossen werden, daß unter Umständen der zugehörige Sensor evtl. fehlerhaft ist. Folglich bleibt diese Vergleichsgröße bei der Ermittlung der aktuellen Referenzgröße unberücksichtigt. Die aktuelle Referenzgröße wird durch Bildung eines gewichteten Mittelwertes gebildet. In die Bildung des gewichteten Mittelwertes gehen zum einen die verbleibenden Vergleichsgrößen und zum anderen die zwischen den verbleibenden Vergleichsgrößen vorhandenen Abstände ein. Die Referenzgröße omegaref wird einem Block 115 zugeführt.

Zum anderen werden im Block 111 Sensorreferenzgrößen für die Sensoren 102, 103 bzw. 104 ermittelt. Ausgehend von der Referenzgröße omegaref und unter Berücksichtigung der die Fahrzeuggeschwindigkeit beschreibenden Größe vf werden diese Sensorreferenzgrößen mit Hilfe von inversen mathematischen Modellen ermittelt. Für den Sensor 102, den Lenkwinkelsensor, wird die Sensorreferenzgröße deltaref ermittelt, die ausgehend vom Block 111 dem Block 106 zugeführt wird. Für den Sensor 103, den Drehraten- bzw. Gierratensensor wird die Sensorreferenzgröße omegaref verwendet, die ausgehend vom Block 111 dem Block 107 zugeführt wird. Für den Sensor 104, den Querbeschleunigungssensor, wird die Sensorreferenzgröße ayref ermittelt, die ebenfalls ausgehend vom Block 111 dem Block 108 zugeführt wird. Die Ermittlung von ayref läuft entsprechend der von deltaref ab.

In einem Block 112 wird ausgehend von den gleich definierten Vergleichsgrößen omeganij, omegaay sowie omegadelta eine Größe omegastreu ermittelt, die bei der Bildung eines Schwellenwertes berücksichtigt wird, der bei der im Block 115 stattfindenden Überwachung des Drehraten- bzw. Gierratensensors 103 berücksichtigt wird. Die Größe omegastreu wird ausgehend vom Block 112 einem Block 113 zugeführt.

Da mit Hilfe der im Block 115 stattfindenden Überwachung der Drehraten- bzw. Gierratensensors 103 überwacht werden soll, bleibt bei der im Block 112 stattfindenden Ermittlung der Größe omegastreu die für den Drehraten- bzw. Gierratensensor 103 ermittelte gleich definierte Vergleichsgröße omegakorr unberücksichtigt. Das heißt, in die Größe omegastreu gehen lediglich die gleich definierten Vergleichsgrößen der anderen Sensoren, das heißt, die gleich definierte Vergleichsgröße des Lenkwinkelsensors 102, die gleich definierte Vergleichsgröße des Querbeschleunigungssensors 104 sowie die gleich definierte Vergleichsgröße der Raddrehzahlsensoren 105ij ein. Die gleich definierte Vergleichsgröße omegakorr des Drehraten- bzw. Gierratensensors 103 bleibt bei der Bildung der Größe omegastreu aus folgendem Grund unberücksichtigt:

Würde die gleich definierte Vergleichsgröße omegakorr bei der Bildung der Größe omegastreu berücksichtigt werden, so könnte bei einem fehlerhaften Drehraten- bzw. Gierratensensor 103 dies zu einer Verfälschung der Größe omegastreu führen, welche sich dann auch im Schwellenwert für die im Block 115 stattfindende Überwachung des Drehraten- bzw. Gierratensensors 103 wiederfinden würde. Für diesen Fall wäre es denkbar, daß mit der im Block 115 stattfindenden Überwachung des Drehraten- bzw. Gierratensensors 103 ein fehlerhafter Sensor nicht ermittelt werden kann.

Die Größe omegastreu wird beispielsweise ausgehend von den gleich definierten Vergleichsgrößen omegadelta, omegaay sowie omeganij gemäß der nachfolgenden Beziehungen ermittelt:

$$\text{omegastreu} = \frac{1}{\text{GEW2} + \text{GEW3} + \text{GEW4}} \tag{1},$$

mit

$$\text{GEW2} = \frac{1}{|\text{omegadelta - omeganij}| \cdot |\text{omegadelta - omegaay}|} \tag{2},$$

$$\text{GEW3} = \frac{1}{|\text{omegadelta - omeganij}| \cdot |\text{omeganij - omegaay}|} \tag{3},$$

$$\text{GEW4} = \frac{1}{|\text{omegadelta - omegaay}| \cdot |\text{omeganij - omegaay}|} \tag{4},$$

Wie den Beziehungen (1), (2). (3) sowie (4) zu entnehmen ist, wird zur Bildung der Größe omegastreu, die die Abweichung der gleich definierten Vergleichsgrößen untereinander beschreibt, lediglich ein Teil der gleich definierten Vergleichsgrößen herangezogen. Für diesen Teil der gleich definierten Vergleichsgrößen stellen die Größen GEW2, GEW3 sowie GEW4 Größen dar, die für jede dieser gleich definierten Vergleichsgrößen dieses Teils der gleich definierten Vergleichsgrößen die Abweichung dieser gleich definierten Vergleichsgröße zu den anderen gleich definierten Vergleichsgrößen dieses Teils dieser gleich definierten Vergleichsgrößen beschreibt. Die Größe omegastreu beschreibt die Abweichung der gleich definierten Vergleichsgrößen untereinander.

Die Größe GEW2 wird für die gleich definierte Größe omegadelta, die Größe GEW3 wird für die gleich definierte Größe omeganij und die Größe GEW4 wird für die gleich definierte Größe omegaay gebildet. Der Ansatz nach den Gleichungen (1) bis (4) wurde so gewählt, daß je besser die gleich definierten Vergleichsgrößen untereinander übereinstimmen, die Größe omegastreu um so kleiner wird. Insbesondere nimmt schon bei zwei näherungsweise übereinstimmenden gleich definierten Vergleichsgrößen die Größe omegastreu einen kleinen Wert an.

Im Block 113 findet eine Filterung der ihm ausgehend vom Block 112 zugeführten Größe omegastreu statt. Die gefilterte Größe omegastreufil wird ausgehend vom Block 113 einem Block 114 zugeführt.

Mit der im Block 113 stattfindenden Filterung werden Schwankungen in der Größe omegastreu eliminiert, die aufgrund der in den verschiedenen Blöcken stattfindenden Modellbildungen auftreten können.

Im Block 114 wird ausgehend von der ihm zugeführten Größe omegastreufil der Schwellenwert omegatol gebildet, der für die im Block 115 stattfindende Überwachung des Drehraten- bzw. Gierratensensors 103 benötigt wird. Die Größe omegastreufil wird ausgehend vom Block 114 einem Block 115 zugeführt.

In die Bildung des Schwellenwertes omegatol geht in Block 114 neben der Größe omegastreufil auch eine vorgegebene, von den gleich definierten Vergleichsgrößen unabhängige Größe ein. Der Schwellenwert omegatol wird dabei beispielsweise als Summe der Größe omegastreufil und der vorgegebenen, von den gleich definierten Vergleichsgrößen unabhängigen Größe gebildet. Die vorgegebene, von den gleich definierten Vergleichsgrößen unabhängige Größe stellt eine Grundtoleranz für den Schwellenwert omegatol dar. Im wesentlichen ist sie durch die Sensorspezifikation und die Unempfindlichkeit des im Steuergerät 101 implementierten Reglers 116 gegenüber Fehlern, mit denen das in ihm zu verarbeitende Signal des Drehraten- bzw. Gierratensensors 103 behaftet ist, vorgegeben. Im Vergleich zu der vorgegebenen, von den gleich definierten Vergleichsgrößen unabhängigen Größe stellt die Größe omegastreufil eine dynamische Toleranzaufweitung in Abhängigkeit der gleich definierten Vergleichsgrößen omegadelta, omegaay sowie omeganij dar. Damit die in der Praxis stets vorhandenen Streuungen, wie sie beispielsweise aufgrund von Fahrbahnunebenheiten oder noch nicht vollständig abgeglichenen Sensoroffsets vorhanden sein können, keine unnötige Aufweitung des Schwellenwertes omegatol stattfindet, kann bei der im Block 114 stattfindenden Summenbildung die Größe omegastreufil geeignet bewertet werden.

Im Block 115 findet ausgehend von den ihm zugeführten Größen omegadelta, omegaref, omegaay, omeganij sowie dem mit Hilfe des Drehraten- bzw. Gierratensensors 105 erzeugten Signals omegamess und dem Schwellenwert omegatol eine Überwachung des Drehraten- bzw. Gierratensensors 103 statt. Das Ergebnis der Überwachung wird mit Hilfe der Größe Fomega ausgegeben, und einem Block 116 zugeführt. Auf die Realisierung der im Block 115 stattfindenden Überwachung des Drehraten- bzw. Gierratensensors 103 wird ausführlich im Zusammenhang mit der Figur 2 eingegangen.

An dieser Stelle sei bemerkt, daß im vorliegenden Ausführungsbeispiel lediglich die Überwachung des Drehraten- bzw. Gierratensensors 103 gezeigt ist. Selbstverständlich kann sowohl für den Lenkwinkelsensor 102 als auch für den Querbeschleunigungssensor 104 eine entsprechende Überwachung realisiert werden. Sowohl für den Lenkwinkelsensor 102 als auch für den Querbeschleunigungssensor 104 sind für die Überwachung jeweils den Blöcken 112, 113, 114 sowie 115 entsprechende Blöcke erforderlich. Hierbei ist allerdings zu beachten, daß bei der Überwachung des Lenkwinkelsensors 102 die gleich definierte Vergleichsgröße omegadelta bei der Bildung des entsprechenden Schwellenwertes unberücksichtigt bleibt. Ferner ist bei der Überwachung des Lenkwinkelsensors 102 anstelle des Signals omegamess das Signal deltamess zu berücksichtigen. Bei der Überwachung des Querbeschleunigungssensors 104 bleibt die für den Querbeschleunigungssensor gleich definierte Vergleichsgröße omegaay bei der Bildung des entsprechenden Schwellenwertes unberücksichtigt. Bei der Überwachung des Querbeschleunigungssensors 104 ist anstelle des Signals omegamess das Signal aymess zu berücksichtigen.

Der mit 116 bezeichnete Block stellt den Regler des Steuergerätes 101 dar. Dem Block 116 werden die Meßsignale deltamess, omegamess, aymess sowie nijmess zugeführt. Ferner erhält der Block 116, ausgehend vom Motor 118 ein Signal mot2, welches beispielsweise die Drehzahl des Motors beschreibt. Ferner erhält der Block 116, ausgehend von einem Block 117, welcher die Ansteuerlogik für die Aktuatoren 119ij und den Motor darstellt, Signale ST2 zugeführt. Bei diesen Signalen kann es sich beispielsweise um die Ansteuerzeiten Aij der Aktuatoren, welche insbesondere als Bremsen ausgebildet sind, handeln. Ausgehend von den Meßsignalen, den Signalen ST2 sowie unter Berücksichtigung der Größe Fomega ermittelt der Regler 116 entsprechend der in ihm implementierten Regelung, Signale ST1, die der Ansteuerlogik 117 zugeführt werden. Wird dem Regler 116 durch das Signal Fomega mitgeteilt, daß der Drehraten- bzw. Gierratensensor 103 fehlerhaft ist, so kann die Bildung der Signale ST1 modifiziert werden.

Im Block 117 werden ausgehend von den ihm zugeführten Signalen ST1 ein Ansteuersignal mot1 für den Motor 118 sowie Ansteuersignale Aij für die Aktuatoren 119ij ermittelt. Durch die entsprechende Ansteuerung des Motors 118 sowie der Aktuatoren 119ij, welche insbesondere als Bremsen ausgebildet sind, wird die Regelung einer die Fahrzeugbewegung repräsentierenden Bewegungsgröße realisiert. Mit den im Block 117 erzeugten Signalen ST2 wird dem Regler 116 beispielsweise der Zustand der Aktuatoren 119ij mitgeteilt.

Abschließend sei zu Figur 1 bemerkt, daß die erfindungswesentlichen Komponenten mit dem Bezugszeichen 120 gekennzeichnet sind.

In Figur 2 ist der erfindungswesentliche Teil der im Block 115 stattfindenden Überwachung des Drehraten- bzw. Gierratensensors 103 dargestellt. Die Überwachung des Drehraten- bzw. Gierraten Sensors 103 startet mit einem Schritt 201. Im Anschluß an den Schritt 201 wird ein Schritt 202 ausgeführt, in welchem einer Größe FZ, die einen Zähler darstellt, ein

Wert 0 zugewiesen wird. Die im Schritt 202 stattfindende Wertzuweisung stellt einen Initialisierungsvorgang dar, wie er beispielsweise bei Betätigung des Zündschlüssels ausgeführt wird. Anschließend an den Schritt 202 wird ein Schritt 203 ausgeführt.

Für die im Schritt 203 stattfindende Abfrage wird zunächst eine Differenz aus der Größe omegamess und einer Größe omegaoff gebildet. Der Betrag einer aus besagter Differenz und der Referenzgröße omegaref gebildeten Differenz wird mit dem Schwellenwert omegatol verglichen. Ist diese Differenz größer als der oder gleich dem Schwellenwert omegatol, was auf einen fehlerhaften Drehraten- bzw. Gierratensensor hinweist, so wird anschließend an den Schritt 203 ein Schritt 204 ausgeführt. Ist dagegen diese Differenz kleiner als der Schwellenwert omegatol, was gleichbedeutend damit ist, daß der Drehraten- bzw. Gierratensensor nicht fehlerhaft ist, so wird anschließend an den Schritt 203 ein Schritt 206 ausgeführt.

Die Größe omegaoff stellt den Offset des mit Hilfe des Drehraten- bzw. Gierratensensors erzeugten Signals omegamess dar. Die Größe omegaoff wird im Block 115, ausgehend vom Signal omegamess, beispielsweise durch Filterung gewonnen. Folglich stellt die Differenz aus den Signalen omegamess bzw. omegaoff das offsetkorrigierte Signal dar, welches mit Hilfe des Drehraten- bzw. Gierratensensors 103 erzeugt wird.

Im Schritt 204 wird mit Hilfe einer Abfrage überprüft, ob die Größe FZ größer als ein erster Schwellenwert S1 ist. Ist die Größe FZ größer als der erste Schwellenwert S1, so wird anschließend an den Schritt 204 ein Schritt 208 ausgeführt. Ist die Größe FZ dagegen kleiner als der erste Schwellenwert S1, so wird anschließend an den Schritt 204 ein Schritt 205 ausgeführt, in welchem die Größe FZ um 1 erhöht, d. h. inkrementiert wird. Anschließend an den Schritt 205 wird ein Schritt 208 ausgeführt. Bei dem ersten Schwellenwert S1 handelt es sich um einen positiven Wert.

An dieser Stelle sei bemerkt. daß ausgehend von dem im Schritt 204 stattfindenden Vergleich der Größe FZ mit dem Schwellenwert S1 eine Begrenzung der Größe FZ nach oben hin realisiert wird.

Im Schritt 206 wird überprüft, ob die Größe FZ gleich dem Wert 0 ist. Wird im Schritt 206 festgestellt, daß die Größe FZ gleich dem Wert 0 ist, so wird anschließend an den Schritt 206 ein Schritt 208 ausgeführt. Wird dagegen im Schritt 206 festgestellt, daß die Größe FZ nicht gleich dem Wert 0 ist, so wird anschließend an den Schritt 206 ein Schritt 207 ausgeführt. Im Schritt 207 wird die Größe FZ um 1 erniedrigt, d. h. dekrementiert. Anschließend an den Schritt 207 wird ein Schritt 208 ausgeführt.

Im Schritt 208 wird überprüft, ob die Größe FZ größer als ein zweiter Schwellenwert S2 ist. Auch der zweite Schwellenwert S2 ist ein positiver Wert. Hierbei sei bemerkt, daß der erste Schwellenwert S1 größer als der zweite Schwellenwert S2 gewählt ist. Wird im Schritt 208 festgestellt, daß die Größe FZ größer als der zweite Schwellenwert S2 ist, was gleichbedeutend damit ist, daß der Drehraten- bzw. der Gierratensensor 103 fehlerhaft ist, so wird anschließend an den Schritt 208 ein Schritt 209 ausgeführt. Im Schritt 209 wird der Größe Fomega der Wert TRUE zugewiesen, da im Schritt 208 festgestellt wurde, daß der Drehraten- bzw. Gierratensensor 103 fehlerhaft ist. Anschließend an den Schritt 209 wird der Schritt 203 ausgeführt.

Wird dagegen im Schritt 208 festgestellt, daß die Größe FZ nicht größer als der zweite Schwellenwert S2 ist, was gleichbedeutend damit ist, daß der Drehraten- bzw. der Gierratensensor 103 nicht fehlerhaft ist, so wird anschließend an den Schritt 208 ein Schritt 210 ausgeführt. Im Schritt 210 wird der Größe Fomega der Wert FALSE zugewiesen, da der Drehraten- bzw. Gierratensensor 103 nicht fehlerbaft ist. Anschließend an den Schritt 210 wird der Schritt 203 ausgeführt.

An dieser Stelle sei bemerkt, daß die beiden Schwellenwerte S1 bzw. S2 nicht unbedingt unterschiedliche Werte aufweisen müssen. Es kann durchaus auch vorteilhaft sein, wenn beide Schwellenwerte den gleichen Wert aufweisen.

Wie bereits im Zusammenhang mit Figur 1 erwähnt, soll die im Ausführungsbeispiel beschriebene Überwachung des Drehraten- bzw. Gierratensensors 103 keine einschränkende Wirkung haben. Mit Hilfe der erfindungsgemäßen Vorrichtung bzw. des erfindungsgemäßen Verfahrens können auch der Lenkwinkelsensor 102 bzw. der Querbeschleunigungssensor 104 überwacht werden. Hierzu ist für die jeweiligen Sensoren eine Abänderung der im Schritt 203 stattfindenden Überwachung erforderlich. So ist für den Lenkwinkelsensor 102 der Betrag aus dem Signal deltamess und einer Größe deltaoff zu bilden, und anstelle der Größe omegaref ist die Größe deltaref zu berücksichtigen. Für den Querbeschleunigungssensor 104 ist der Betrag aus der Größe aymess und einer Größe ayoff zu bestimmen, anstelle der Größe omegaref ist die Größe ayref zu berücksichtigen.

An dieser Stelle sei bemerkt, daß die in Figur 2 dargestellte Überwachung des Drehraten- bzw. Gierratensensors 103 durchgeführt wird, wenn die in den verschiedenen Blöcken verwendeten mathematischen bzw. inversen mathematischen Modelle gültig sind. Entsprechendes gilt auch für die eventuelle Überwachung des Lenkwinkelsensors bzw. des Querbeschleunigungssensors.

Neben der in Figur 2 dargestellten Überwachung des Drehraton bzw. Gierratensensors 103 findet im Block 115 ausgehend von den gleich definierten Vergleichsgrößen omegadelta, omegaay, omeganij sowie einer aus dem Signal omegamess gebildeten Größe omegakorr1 eine weitere Überwachung des Drehraten- bzw. Gierratensensors 103 statt. Die Größe omegakorr1 stellt in diesem Zusammenhang das offsetkorrigierte Signal omegamess dar, welches beispielsweise durch Langzeitfilterung ermittelt wird.

Diese zweite Überwachung findet unabhängig von der Gültigkeit der in den verschiedenen Blöcken verwendeten mathematischen bzw. inversen mathematischen Modelle statt. Bei dieser zweiten Überwachung wird mit Hilfe einer ersten Abfrage überprüft, ob die drei gleich definierten Vergleichsgrößen über eine gewisse Zeit in einem engen Giergeschwindigkeitsband liegen. In einer zweiten Abfrage wird überprüft, ob der offsetkorrigierte Wert omegakorr1 für eine gewisse Zeitdauer einen Mindestabstand zu den drei gleich definierten Vergleichsgrößen aufweist. Der Verdacht, daß der Drehraten- bzw. Gierratensensor 103 fehlerhaft ist, besteht dann, wenn bei der ersten Abfrage festgestellt wird, daß die drei gleich definierten Vergleichsgrößen über eine gewisse Zeit in einem engen Giergeschwindigkeitsband liegen und wenn bei der zweiten Abfrage festgestellt wird, daß die offsetkorrigierte Größe omegakorr1 für eine gewisse Zeit einen Mindestabstand zu den drei gleich definierten Vergleichsgrößen aufweist. Ist dagegen eine der beiden Abfragen nicht erfüllt, so besteht der Verdacht nicht, daß der Drehraten- bzw. Gierratensensor fehlerhaft ist. Ist der Drehraten- bzw. Gierratensensor 103 fehlerhaft, so wird der Größe Fomega der Wert TRUE zugewiesen. Ist dagegen der Drehraten- bzw. Gierratensensor 103 nicht fehlerhaft, so wird der Größe Fomega der Wert FALSE zugewiesen.

Es sei abschließend noch bemerkt, daß die spezielle Ausgestaltung des in Figur 2 dargestellten Flußdiagrammes keine einschränkende Wirkung auf die erfindungswesentliche Idee darstellen soll.

**Patentansprüche**

1. Vorrichtung zur Überwachung von Sensoren (103) in einem Fahrzeug, verbindbar mit Sensoren zur Zuführung der Sensorsignale, wobei die Sensoren (102, 103, 104, 105ij) Signale (deltamess, omegamess, aymess, nijmess) erzeugen, welche unterschiedliche physikalische Größen repräsentieren,
die erste Mittel (106, 107, 108, 110) enthält, mit denen für wenigstens zwei Sensoren, ausgehend von wenigstens den von ihnen erzeugten Signalen, für die Sensoren gleich definierte Vergleichsgrößen (omegadelta, omegakorr, omegaay, omeganij) ermittelt werden,
die zweite Mittel (115) enthält, mit denen für wenigstens einen Sensor eine Überwachung durchgeführt wird, wobei die Überwachung wenigstens in Abhängigkeit einer für den Sensor ermittelten Sensorreferenzgröße (omegaref), dem mit dem Sensor erzeugten Signal (omegamess) und einem zugehörigen Schwellenwert (omegato1) durchgeführt wird,
**dadurch gekennzeichnet, dass**
dritte Mittel (112) enthalten sind, mit denen wenigstens ausgehend von wenigstens zwei der gleich definierten Vergleichsgrößen eine Größe (omegastreu) ermittelt wird, die bei der Bildung des Schwellenwertes berücksichtigt wird.

2. Vorrichtung nach Anspruch 1, **dadurch gekennzeichnet, daß** die ermittelten, gleich definierten Vergleichsgrößen (omegadelta, omegakorr, omegaay, omeganij) eine physikalische Größe repräsentieren, die der mit einem der im Fahrzeug enthaltenen Sensoren (103) erfaßten Giergeschwindigkeit (omegamess) entspricht.

3. Vorrichtung nach Anspruch 1, **dadurch gekennzeichnet, daß** in die Bildung des Schwellenwertes (omegatol) ferner eine vorgegebene, von den gleich definierten Vergleichsgrößen unabhängige Größe eingeht,
wobei sich der Schwellenwert (omegatol) als Summe der Größe (omegastreu), die wenigstens ausgehend von wenigstens zwei der gleich definierten Vergleichsgrößen gebildet wird und der vorgegebenen, von den gleich definierten Vergleichsgrößen (omegadelta, omegakorr, omegaay, omeganij) unabhängigen Größe ergibt.

4. Vorrichtung nach Anspruch 1, **dadurch gekennzeichnet, daß** die bei der Bildung des Schwellenwertes berücksichtigte Größe (omegastreu) die Abweichung der wenigstens zwei gleich definierten Vergleichsgrößen (omegadelta, omegakorr, omegaay, omeganij) untereinander beschreibt.

5. Vorrichtung nach Anspruch 4, **dadurch gekennzeichnet, daß** bei der Bildung der Größe (omegastreu), die die Abweichung der wenigstens zwei gleich definierten Vergleichsgrößen (omegadelta, omegakorr, omegaay, omeganij) untereinander beschreibt, die gleich definierte Vergleichsgröße des Sensors (omegakorr) unberücksichtigt bleibt, der mit Hilfe der zweiten Mittel (115) überwacht wird, und/oder
daß zur Bildung der Größe (omegastreu), die die Abweichung der wenigstens zwei gleich definierten Vergleichsgrößen (omegadelta, omegakorr, omegaay, omeganij) untereinander beschreibt, ausgehend von jeder der wenigstens zwei gleich definierten Vergleichsgrößen jeweils eine Größe ermittelt wird, die die Abweichung dieser gleich definierten Vergleichsgröße zu den anderen der wenigstens zwei gleich definierten Vergleichsgrößen beschreibt.

6. Vorrichtung nach Anspruch 1, **dadurch gekennzeichnet, daß** die dritten Mittel einen Filter (113) enthalten, mit dem die bei der Bildung des Schwellenwertes berücksichtigte Größe (omegastreu) gefiltert wird.

7. Vorrichtung nach Anspruch 1, **dadurch gekennzeichnet, daß** die Sensorreferenzgröße (omegaref) wenigstens ausgehend von den gleich definierten Vergleichsgrößen (omegadelta, omegakorr, omegaay, omeganij) gebildet wird.

8. Vorrichtung nach Anspruch 1, **dadurch gekennzeichnet, daß** zur Überwachung des wenigstens einen Sensors (103) das mit dem Sensor erzeugte Signal (omegamess) offsetkorrigiert wird (omegakorr), und
daß eine Differenz aus dem offsetkorrigierten Signal (omegakorr) und der Sensorreferenzgröße (omegaref) gebildet wird, und der Betrag der Differenz mit dem Schwellenwert (omegatol) verglichen wird.

9. Vorrichtung nach Anspruch 8, **dadurch gekennzeichnet, daß** zur Überwachung des wenigstens einen Sensors (103) eine Größe (Fz) gebildet wird,
wobei die Größe erhöht wird (205), wenn der Betrag der Differenz größer als der Schwellenwert (omegatol) ist, und wobei die Größe erniedrigt wird (207), wenn der Betrag der Differenz kleiner als der Schwellenwert (omegatol) ist, und daß der wenigstens eine Sensor dann fehlerhaft ist, wenn die Größe größer als ein zweiter Schwellenwert (S2) ist.

**10.** Vorrichtung nach Anspruch 9, **dadurch gekennzeichnet, dass** die Größe (Fz) als Zähler realisiert ist.

**11.** Verfahren zur Überwachung von Sensoren (103) in einem Fahrzeug, bei dem die Sensoren (102, 103, 104, 105ij) Signale erzeugen, welche unterschiedliche physikalische Größen repräsentieren,

bei dem für wenigstens zwei weitere Sensoren, ausgehend von wenigstens den von ihnen erzeugten Signalen (deltamess, omegamess, aymess, nijmess), für die Sensoren gleich definierte Vergleichsgrößen (omegadelta, omegakorr, omegaay, omeganij) ermittelt werden,

bei dem für wenigstens einen Sensor (103) eine Überwachung durchgeführt wird, wobei die Überwachung wenigstens in Abhängigkeit einer Sensorreferenzgröße (omegaref), dem mit dem Sensor erzeugten Signal (omegamess) und einem zugehörigen Schwellenwert (omegato1) durchgeführt wird,

**dadurch gekennzeichnet, dass**

wenigstens ausgehend von wenigstens zwei der gleichdefinierten Vergleichsgrößen eine Größe (omegastreu) ermittelt wird, die bei der Bildung des Schwellenwertes berücksichtigt wird.

**Claims**

**1.** Apparatus for monitoring sensors (103) in a vehicle, which can be connected to sensors for supplying the sensor signals, with the sensors (102, 103, 104, 105ij) producing signals (deltamess, omegamess, aymess, nijmess) which represent different physical variables,

which contains first means (106, 107, 108, 110), by means of which comparison variables (omegadelta, omegakorr, omegaay, imeganij) which are defined in the same way for the sensors, are determined for at least two sensors, on the basis of at least the signals produced by them,

which contains second means (115), by means of which monitoring is carried out for at least one sensor, with the monitoring being carried out at least as a function of a sensor reference variable (omegaref) determined for that sensor, the signal (omegamess) produced by the sensor, and an associated threshold value (omegatol),

**characterized in that**

third means (112) are included, by means of which a variable (omegastreu) which is taken into account in the formation of the threshold value is determined at least on the basis of at least two of the comparison variables which are defined in the same way.

**2.** Apparatus according to Claim 1, **characterized in that** the determined comparison variables (omegadelta, omegakorr, omegaay, omeganij) which are defined in the same way represent a physical variable, which corresponds to the yaw rate (omegamess) as detected by one of the sensors (103) which is contained in the vehicle.

**3.** Apparatus according to Claim 1, **characterized in that** a predetermined variable which is independent of the comparison variables which are defined in the same way is also included in the formation of the threshold value (omegatol),

with the threshold value (omegatol) being obtained as the sum of the variable (omegastreu) which is formed at least on the basis of at least two of the comparison variables which are defined in the same way and the predetermined variable which is independent of the comparison variables (omegadelta, omegakorr, omegaay, omeganij) which are defined in the same way.

**4.** Apparatus according to Claim 1, **characterized in that** the variable (omegastreu) which is taken into account in the formation of the threshold value describes the discrepancy between the at least two comparison variables (omegadelta, omegakorr, omegaay, omeganij) which are defined in the same way.

**5.** Apparatus according to Claim 4, **characterized in that**, when forming the variable (omegastreu) describes the discrepancy between the at least two comparison variables (omegadelta, omegakorr, omegaay, omeganij) which are defined in the same way, the comparison variable, which is defined in the same way, for the sensor (omegakorr) which is monitored with the aid of the second means (115) is ignored, and/or

**in that**, in order to form the variable (omegastreu) which describes the discrepancy between the at least two comparison variables (omegadelta, omegakorr, omegaay, omeganij) which are defined in the same way, one variable is in each case determined on the basis of each of the at least two comparison variables which are defined in the same way, and describes the discrepancy between this comparison value which is defined in the same way and the others of the at least two comparison variables which are defined in the same way.

**6.** Apparatus according to Claim 1, **characterized in that** the third means include a filter (113), by means of which the variable (omegastreu) which is taken into account in the formation of the threshold value is filtered.

7. Apparatus according to Claim 1, **characterized in that** the sensor reference variable (omegamess) is formed at least on the basis of the comparison variable (omegadelta, omegakorr, omegaay, omeganij) which are defined in the same way.

8. Apparatus according to Claim 1, **characterized in that**, in order to monitor the at least one sensor (103), an offset correction (omegakorr) is applied with the signal (omegamess) which is produced by the sensor, and **in that** the difference is formed between the offset-corrected signal (omegakorr) and the sensor reference variable (omegaref), and the magnitude of the difference is compared with the threshold value (omegatol).

9. Apparatus according to Claim 8, **characterized in that** a variable (Fz) is formed in order to monitor the at least-one sensor (103), with the variable being increased (205) when the magnitude of the difference is greater than the threshold value (omegatol), and with the variable being decreased (207) when the magnitude of the difference is less than the threshold value (omegatol) and, **in that** the at least one sensor is faulty when the variable is greater than a second threshold value (S2).

10. Apparatus according to Claim 9, **characterized in that** the variable (Fz) is in the form of a counter.

11. Method for monitoring the sensors (103) in a vehicle, in which the sensors (102, 103, 104, 105ij) produce signals which represent different physical variables, in which comparison variables (omegadelta, omegakorr, omegaay, omeganij) which are defined in the same way are determined for the sensors on the basis of at least the signals (deltamess, omegamess, aymess, nijmess) which are produced by them, in which monitoring is carried out for at least one sensor (103), with the monitoring being carried out at least as a function of a sensor reference variable (omegaref), the signal (omegamess) produced by the sensor and an associated threshold value (omegatol), **characterized in that** a variable (omegastreu) which is taken into account in the formation of the threshold value is determined on the basis of at least two of the comparison variables which are defined in the same way.

**Revendications**

1. Dispositif pour surveiller des détecteurs (103) dans un véhicule, qu'on peut relier à des détecteurs pour acheminer les signaux de détecteur, les détecteurs (102, 103, 104, 105ij) produisant des signaux (deltamess, omegamess, aymess, nijmess) qui représentent différentes grandeurs physiques, qui contient des premiers moyens (106, 107, 108, 110) avec lesquels sont établies pour au moins deux détecteurs, au moins à partir des signaux qu'ils produisent, des grandeurs de comparaison (omegadelta, omegakorr, omegaay, omeganij) définies de façon égale pour les détecteurs, qui contient des deuxièmes moyens (115) avec lesquels on réalise pour au moins un détecteur une surveillance, la surveillance étant réalisée au moins en fonction d'une grandeur de référence de détecteur (omegaref) établie pour le détecteur, en fonction du signal (omegamess) produit avec le détecteur et en fonction d'une valeur seuil (omegatol) correspondante, **caractérisé en ce que** sont contenus des troisièmes moyens (112) avec lesquels on établit, au moins à partir d'au moins deux des grandeurs de comparaison définies de façon égale, une grandeur (omegastreu) dont on tient compte lors de la formation de la valeur seuil.

2. Dispositif selon la revendication 1, **caractérisé en ce que** les grandeurs de comparaison (omegadelta, omegakorr, omegaay, omeganij) définies de façon égale représentent une grandeur physique qui correspond à la vitesse de lacet (omegamess) enregistrée avec un des détecteurs (103) contenus dans le véhicule.

3. Dispositif selon la revendication 1, **caractérisé en ce qu'** une grandeur prédéterminée, indépendante des grandeurs de comparaison définies de façon égale, entre en outre dans la formation de la valeur seuil (omegatol),
la valeur seuil (omegatol) étant obtenue en tant que somme de la grandeur (omegastreu) qui est formée au moins à partir d'au moins deux des grandeurs de comparaison définies de façon égale et, donne la grandeur prédéterminée, indépendante des grandeurs de comparaison définies de façon égale (omegadelta, omegakorr, omegaay, omeganij).

4. Dispositif selon la revendication 1,
**caractérisé en ce que**
la grandeur (omegastreu), prise en compte lors de la formation de la valeur seuil, décrit l'écart réciproque des grandeurs de comparaison définies de façon égale (omegadelta, omegakorr, omegaay, omeganij) et au moins au nombre de deux.

5. Dispositif selon la revendication 4,
**caractérisé en ce que**
lors de la formation de la grandeur (omegastreu) qui décrit l'écart réciproque des grandeurs de comparaison définies de façon égale (omegadelta, omegakorr, omegaay, omeganij) au moins au nombre de deux, on ne prend pas en compte la grandeur de comparaison définie de façon égale du détecteur (omegakorr) qui est surveillé à l'aide des deuxièmes moyens (115) et/ou
pour former la grandeur (omegastreu) qui décrit l'écart réciproque des grandeurs de comparaison définies de façon égale (omegadelta, omegakorr, omegaay, omeganij) et au moins au nombre de deux, on établit, à partir de chacune des grandeurs de comparaison définies de façon égale et au moins au nombre de deux, à chaque fois une grandeur qui décrit l'écart de cette grandeur de comparaison définie de façon égale par rapport aux autres grandeurs de comparaison définies de façon égale et au moins au nombre de deux.

6. Dispositif selon la revendication 1,
**caractérisé en ce que**
les troisièmes moyens contiennent un filtre (113) avec lequel est filtrée la grandeur (omegastreu) prise en compte lors de la formation de la valeur seuil.

7. Dispositif selon la revendication 1,
**caractérisé en ce que**
la grandeur de référence du détecteur (omegaref) est formée au moins à partir des grandeurs de comparaison définies de façon égale (omegadelta, omegakorr, omegaay, omeganij).

8. Dispositif selon la revendication 1,
**caractérisé en ce que**
pour surveiller le détecteur (103) au moins au nombre d'un on corrige en décalage (omegakorr) le signal (omegamess) produit par le détecteur et
on calcule une différence à partir du signal corrigé en décalage (omegakorr) et de la grandeur de référence du détecteur (omegaref) et on compare la valeur de la différence avec la valeur seuil (omegatol).

9. Dispositif selon la revendication 8,
**caractérisé en ce que**
pour surveiller le détecteur (103) au moins au nombre d'un on forme une grandeur (Fz),
la grandeur (205) étant augmentée lorsque la valeur de la différence est supérieure à la valeur seuil (omegatol) et la valeur (207) étant abaissée lorsque la valeur de la différence est inférieure à la valeur seuil (omegatol) et le détecteur au moins au nombre d'un étant entaché d'erreur lorsque la grandeur est supérieure à une deuxième valeur seuil (S2).

10. Dispositif selon la revendication 9,
**caractérisé en ce que**
la grandeur (Fz) est réalisée en tant que compteur.

11. Procédé pour surveiller des détecteurs (103) dans un véhicule, pour lequel les détecteurs (102, 103, 104, 105ij) produisent des signaux qui représentent différentes grandeurs physiques, pour lequel, pour au moins deux autres détecteurs, au moins à partir des signaux qu'ils produisent (deltamess, omegamess, aymess, nijmess), sont établies des grandeurs de comparaison (omegadelta, omegakorr, omegaay, omeganij) définies de façon égale pour les détecteurs, pour lequel on réalise pour au moins un détecteur (103) une surveillance, la surveillance étant

EP 0 925 484 B1

réalisée au moins en fonction d'une grandeur de référence de détecteur (omegaref), en fonction du signal (omegamess) produit avec le détecteur et en fonction d'une valeur seuil (omegatol) correspondante,
**caractérisé en ce que**
l'on établit, au moins à partir d'au moins deux des grandeurs de comparaison définies de façon égale, une grandeur (omegastreu) dont on tient compte lors de la formation de la valeur seuil.

# Fig. 1

EP 0 925 484 B1

# Fig. 2

```
        ┌──────────┐
        │   Start  │──── 201
        └────┬─────┘
             │
        ┌────┴─────┐
        │  Fz = 0  │──── 202
        └────┬─────┘
             │
             ▼
    ╱──────────────────────╲
   ╱ |(omegamess - omegaoff) ╲              N
  ╱   - omegaref| ≥ omegatol   ╲──────────────────┐
   ╲            ?             ╱  203              │
    ╲──────────────────────╱                     ▼
             │ Y                          ╱───────────╲
             ▼                      Y    ╱   Fz = 0    ╲
        ╱─────────╲                 ┌───╱      ?        ╲──── 206
    Y  ╱  Fz > S1  ╲                │   ╲──────────────╱  N
   ┌──╱     ?       ╲──── 204       │         │
   │  ╲─────────────╱               │         ▼
   │         │ N                    │    ┌──────────┐
   │         ▼                      │    │  Fz - 1  │──── 207
   │    ┌──────────┐                │    └────┬─────┘
   │    │  Fz + 1  │──── 205        │         │
   │    └────┬─────┘                └─────────┤
   └─────────┤                                │
             │                                │
             └───────────────┬────────────────┘
                             │
                             ▼
                        ╱─────────╲
                       ╱  Fz > S2  ╲     N
                      ╱      ?       ╲──────────┐
                      ╲─────────────╱  208      │
                             │ Y                │
                             ▼             ┌─────────────────┐
                      ┌───────────────┐    │ Fomega = False  │──── 210
                      │ Fomega = True │    └─────────────────┘
                      └───────┬───────┘ 209
                             │
```